**Europäisches Patentamt**

**European Patent Office**

**Office européen des brevets**

(19)

(11) Publication number: **0 079 250**
**B1**

## (12) EUROPEAN PATENT SPECIFICATION

(45) Date of publication of patent specification: **23.07.86**

(21) Application number: **82306011.6**

(22) Date of filing: **11.11.82**

(51) Int. Cl.⁴: **B 60 J 7/08,** B 60 P 3/32

(54) **Elevating roof assembly.**

(30) Priority: **11.11.81 GB 8133972**

(43) Date of publication of application:
**18.05.83 Bulletin 83/20**

(45) Publication of the grant of the patent:
**23.07.86 Bulletin 86/30**

(84) Designated Contracting States:
**DE FR GB IT**

(56) References cited:
**DE-A-3 047 767**
**DE-B-2 717 516**
**GB-A-1 385 118**
**GB-A-1 496 314**
**GB-A-1 565 322**

(73) Proprietor: **Autohomes (UK) Limited**
**59 Old Wareham Road**
**Poole Dorset (GB)**

(72) Inventor: **Badger, George John**
**45, Sutton Road**
**Charminster Bournemouth (GB)**

(74) Representative: **Richards, David John et al**
**Page, White & Farrer 5, Plough Place New Fetter**
**Lane**
**London EC4A 1HY (GB)**

Courier Press, Leamington Spa, England.

## Description

This invention relates to elevating roof assemblies intended to provide additional head room in vehicles such as touring caravans, motor caravans, and estate cars. The invention is particularly, but not exclusively, concerned with elevating roof assemblies of the kind in which the side walls of the assembly comprise rigid panels which can be folded about hinge lines to enable the roof assembly to be moved between its collapsed and its elevated position.

Vehicles fitted with elevating roof assemblies generally comprise a fixed roof member which is formed with a rectangular opening permitting access to the space inside the roof when the assembly is in the raised position. In the raised position, collapsible side walls extend between the edges of the roof and the edges of the opening. Examples of such an assembly are described in U.K. Patent No. GB—A—1,385,118 and in Patent of Addition thereto No. GB—A—1,496,314. With relatively large vehicles, this space is usually large enough to accommodate a pair of sleeping berths, but for smaller vehicles the roof space may be inadequate for two berths with the required access. Elevating roof assemblies have been proposed in which the roof space is increased by designing the roof so that, in the erected position, it overhangs the rectangular opening in the fixed roof member, but in general these proposals have hitherto been confined to roof assemblies in which the side walls are formed from flexible material. An example of this type of construction is described in U.K. patent No. GB—A—1,565,322.

An example of vehicle with an elevating roof assembly with provision to increase the width of the roof space of the kind which uses rigid side walls is described in German Auslegeschrift DE—B—2717 516. One of the problems inherent in designs of this kind is that the assistor mechanism for assisting the raising or lowering of the roof assembly cannot be located along the sides of the opening as it would obstruct the additional roof space created along these sides when the assembly is erected. As with the present invention, DE—B—2717 516 therefore proposes an assistor mechanism located at the end of the assembly to support the roof in the elevated position. Substantial problems arise when the assistor mechanism is located at the ends of the roof assembly. In its elevated condition (particularly before the side walls are erected) the roof assembly has little torsional rigidity, and it has been found that conventional gas struts located at both ends of the assembly acting directly between the fixed roof member and the roof cap are unable to resist the torsional stresses generated during the raising and lowering operation. The solution adapted in DE—B—2717516 is to use an elaborate assistor mechanism in which the assistor means (cylinder 11) acts directly on the side walls, and additional rigidity is provided by supports 13 and 14; this arrangement is however unlikely to provide the necessary degree of torsional rigidity, and furthermore the complex nature of the mechanism may in practice lead to difficulties in operation, such as high friction, undue wear and jamming.

The present invention provides an elevating roof assembly of the kind having rigid side walls, in which the space provided in the roof opening is of substantially larger dimensions than the opening in the fixed roof member, and which incorporates a simple yet effective assisting mechanism for supporting the roof assembly during movement between its lowered and raised positions.

According to the pre-characterising portion of claim 1, there is provided an elevating roof assembly for a vehicle, as disclosed in DE—B—2717516, comprising a fixed roof member defining a generally rectangular opening; a roof panel movable between a lowered position in which it overlies the opening, and an elevated position in which it is supported above the opening; support means adapted to support the roof panel in the elevated position; at least one base panel movably mounted relative to said fixed roof member which base panel is movable from a stowed position to an extended position extending in a generally horizontal plane outwardly beyond one edge of said opening to form, when said roof assembly is erected, an extended base part of said assembly; and rigid, collapsible side wall means adapted to extend in the elevated position of said roof panel between the corresponding edge of said roof panel and said base panel. According to the invention the assembly is characterised in that the support means adapted to support the roof panel in the elevated position comprises a support member pivotally mounted on said fixed roof member for movement in a substantially vertical plane; control means connected between the fixed roof member and the support member operable to control the pivotal movement of said support member; a support surface on said support member; and follower means connected to said roof panel operable to be supported on and to follow said support surface during raising and lowering of said roof assembly.

The provision of a generally horizontal base panel which is used to extend the area of the roof assembly outwardly of the rectangular opening greatly increases the base area of the roof enclosure when the roof panel is in the elevated position, and enables this additional space to be used for a sleeping berth. The use of rigid side walls means that excellent heat and sound insulation can be effected.

Preferably, the base panel is slidably mounted with respect to the fixed roof member and is slidable in a generally horizontal plane between said stowed position within said opening and said extended position. Advantageously, two said base panels are provided adapted to extend beyond opposite edges of said opening so that the additional space is provided on both sides of the roof assembly. Where the base panels are mounted for sliding movement with respect to the fixed roof member, each said base panel may have a width which is substantially one half that of the roof opening so that in the stowed position, the two panels can be disposed side-by-side within the opening.

In one embodiment of the invention, the side wall means of the roof assembly extends between the outermost edge of the base panel and the corresponding edge of the roof panel and comprises at least two rigid wall panels, one of which is connected to the base panel and the other of which is connected to the roof panel. These panels are disposed one above the other when the assembly is in the elevated position. Preferably, the lowermost wall panel is hinged along its lower edge to the outermost edge of the base panel, and in the stowed position of the base panel is folded along this hinge line to overlie the base panel. The upper wall panel, which is suitably hinged along its upper edge to the roof panel can likewise be folded inwardly of the roof panel so that it can be stowed beneath the panel in the collapsed position of the assembly. In the raised position of the assembly, the two panels forming the side wall are interconnected along corresponding longitudinal edges to form a rigid assembly.

In one particular embodiment of the invention, the upper wall panel is not connected directly to the roof panel but instead is hinged to a relatively narrow secondary wall panel which is itself connected by a hinge line to the roof panel. The complete side wall is thus formed by three panels two of which are connected to the roof panel and the third of which is connected to the base panel.

Advantageously, rigid end panels are hinged to the base panel at each end to close each end of the roof assembly defined by a base panel when the roof is in the raised position.

Suitably, the sides of the roof assembly which are not provided with extensible base panels comprise rigid side walls each formed by a pair of hinged wall panels which are adapted to fold inwardly of the roof opening in the collapsed position of the assembly.

The support mechanism is not connected directly to the roof assembly itself but acts as an independent mechanism which guides and supports the roof assembly during the raising and lowering operation. The support member is preferably located immediately adjacent an end wall of the assembly not provided with an extensible base panel, for movement in a vertical plane parallel to the plane of the corresponding end wall.

Preferably, the support surface on said support member is curved in said vertical plane and the support member comprises a support bar at least a free end of which is curved, the support surface being formed on the upper surface of said support bar. Alternatively, the support surface may be formed as a slot or track within the support bar.

Suitably, the control means for the support bar comprises a telescopic piston and cylinder assembly pivotally connected at one end to the fixed roof member and at the other end to the support bar. This piston and cylinder assembly may be pressurised to raise and lower the support bar, or may simply act as a control device to prevent the bar from collapsing under the weight from the roof assembly. Alternative control means which may be used comprise torsion bars, gas filled struts, or spring assistors.

Preferably, the follower means comprises a roller rotatably mounted on a support connected to the roof panel, although a fixed member may also be used providing the additional friction is acceptable.

In a preferred embodiment of the invention, a pair of said support members are provided at opposite ends of said roof assembly, and preferably said support members are interconnected for simultaneous pivotal movement thereof. This provides a substantially more rigid arrangement than individual support members. In this embodiment, the support members may be mounted on a common axle which is journalled in supports connected to the fixed roof member.

In order that the invention may be more fully understood, an embodiment in accordance therewith will now be described by way of example with reference to the accompanying drawings, in which:

Figure 1 is a side view of an elevating roof assembly, shown partly in external elevation and partly in internal elevation;

Figure 2 is an end view of the assembly shown in Figure 1, shown as a half external end elevation and a half section along the line A—A in Figure 1;

Figure 3 is a diagrammatic sectional view illustrating the folding of the longitudinal wall panels;

Figure 4 is a diagrammatic sectional view illustrating the folding of the end wall panels;

Figure 5 is a partial perspective view showing the roof assembly in the elevated position;

Figure 6 is a partial internal perspective view illustrating how the various panels are stowed during lowering of the roof assembly;

Figure 7 is an end elevation of an assisting mechanism used for supporting an elevating roof assembly; and

Figure 8 is a side elevation of the mechanism shown in Figure 7.

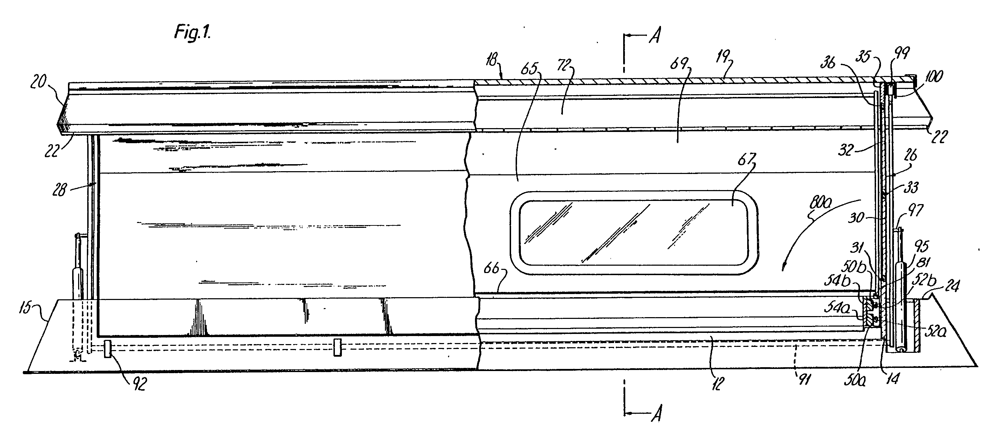

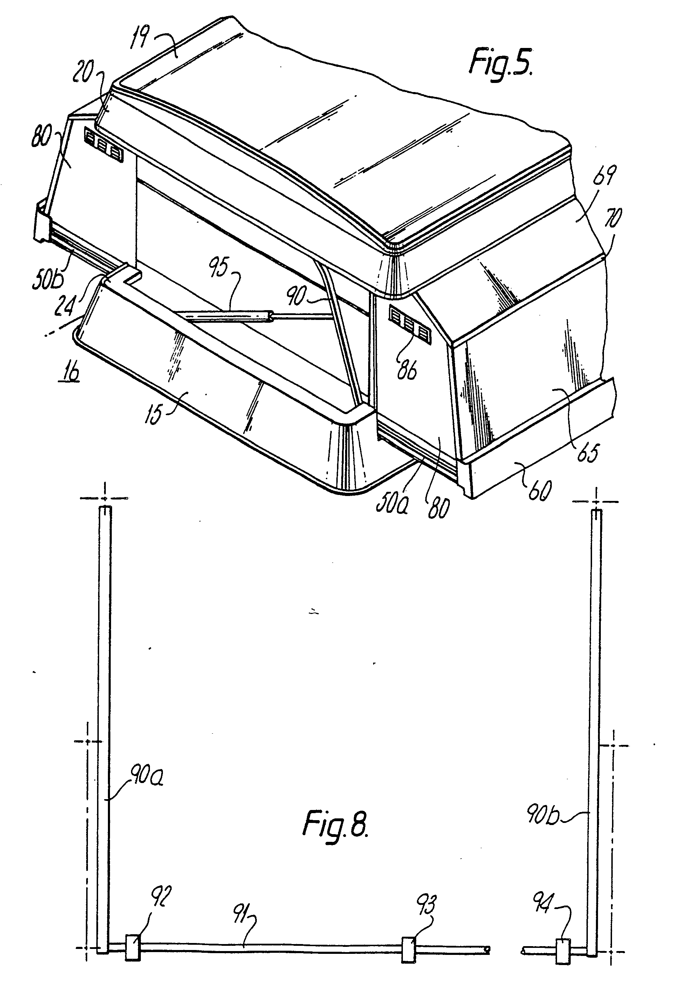

Referring to the drawings, Figures 1 to 6 show an elevating roof assembly for a vehicle such as a motor caravan in which the side walls are formed from rigid panels. Figures 7 and 8 illustrate a mechanism for assisting in the raising and lowering operation of an elevating roof assembly such as that shown in Figures 1 to 6, although it will be appreciated that this assisting mechanism can be used in other types of roof assembly which may or may not be provided with rigid wall panels.

Referring to the drawings, these show an elevating roof assembly comprising a fixed roof member defining a generally rectangular opening 10 providing access to the space provided in the roof when the assembly is in the elevated position. The fixed roof member may comprise the actual roof of the vehicle, but in this case it comprises a rectangular frame formed by longitudinal frame members 11, 12 and end frame members 13, 14. These frame members are surrounded by a plinth 15 which is supported on the roof 16 of the vehicle, and which is intended to weatherproof the various components of the assembly when the assembly is in the lowered position.

The assembly is provided with a roof panel structure 18, which is shown in the elevated position in the drawings, and this roof panel structure is intended to overlie the opening 10 in the lowered position of the roof assembly, and to be supported above the opening in the elevated position. The roof panel structure 18 comprises a roof cap 19 provided around its peripheral edges with a downwardly depending trim element 20, the lower edges of which are provided with a sealing strip 22 made for example of flexible plastics material or rubber, which in the lowered position of the roof cap seats in a recess 24 formed around the upper front and rear edges of the plinth 15, and, as will be described, in a longitudinal channel 62 provided along the outer edges of the extensible base panels. In this manner, complete weathertightness of the assembly is ensured when the roof assembly is in the lowered position usually adopted when the vehicle is mobile.

The roof assembly is provided with short end walls 26 28, each formed by a pair of hingedly interconnected wall panels made from a rigid material such as metal sheet suitably heat insulated. In the case of the front wall 26, these wall panels comprise a lower panel 30 which is connected along its lowermost edge by a hinge 31 to frame member 14, and an upper panel 32 which is hinged along its lower edge to the upper edge of panel 30 by hinge 33, and connected to a roof frame element 35 along its upper edge by hinge 36. The rear end wall 28 is formed in exactly the same manner by means of lower panel 30a, upper panel 32a, roof frame member 35a, and hinges 31a, 33a, and 36a.

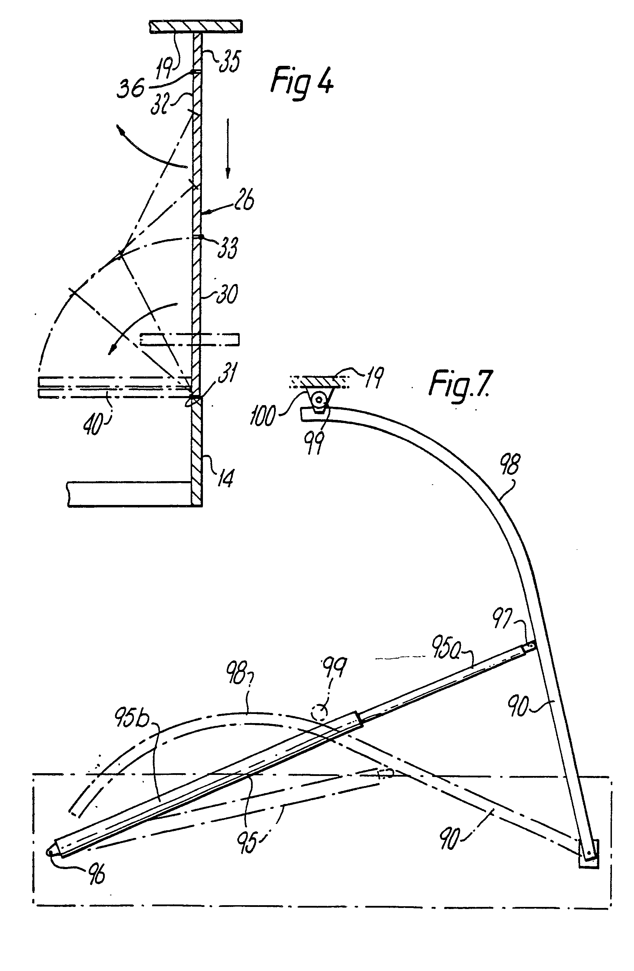

The manner in which these panels are folded during raising and lowering of the roof assembly is illustrated in Figure 4, and this shows how the panels 30, 32 are initially broken along hinge line 33 by pulling inwardly on these panels, at the same time drawing the roof panel structure 18 downwardly. As the panels are pulled inwardly, they pivot about their hinges 31, 33 and 36 until the roof panel structure 18 reaches the lowermost position, in which the panels 30 and 32 overlie one another as shown at 40 in Figure 4. The rear end wall 28 is collapsed in an identical manner, simultaneously with front end wall 26.

The elevating roof assembly shown in the drawings is provided with a pair of movable base panel assemblies 44, 45 operable to increase the area of the roof assembly when the assembly is in its elevated position. Each base panel assembly comprises a generally rectangular horizontally disposed panel 47 provided along its outermost edge with an upstanding longitudinal wall element 48, and along its transverse edges with transverse wall members 49. Slide bars 54 are fixed to the outer surfaces of the transverse wall members 49, and these slide bars extend, as shown in Figure 6, inwardly beyond the inner edges of panels 47. On their outer surfaces, each slide bar 54 is provided with a slide 50 which engages in a guide 51 provided on the inner face of the respective end frame member 13, 14, as shown in Figure 1. The left-hand slide mechanism 50a, 52a is located at a lower level than right-hand slider mechanism 50b, 52b, so that the mechanisms operate one above the other, and this enables the slide bars 54a, 54b to have a substantial length compared to the width of panels 47, which helps resist torsional displacement of the panels 47 when they are used for sleeping berths.

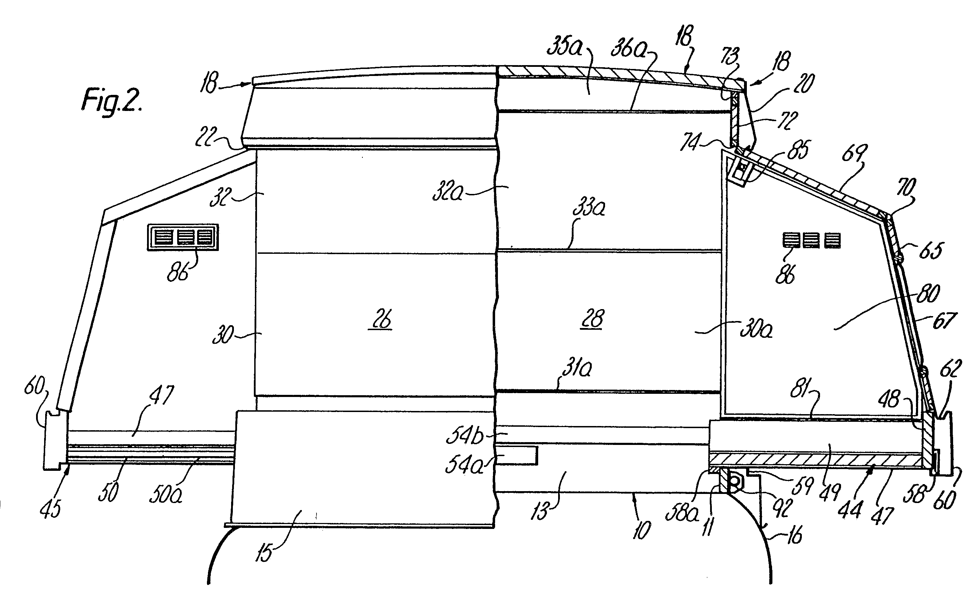

In the collapsed position of the roof assembly, the base panel structures 44, 45 are stowed substantially within the opening 10 with only a small gap between the two panel structures. During elevation of the roof assembly, they can be moved outwardly of the opening into the outrigger position shown in Figures 2 and 6 in which they are disposed substantially beyond the outer longitudinal edges of the opening 10, thereby substantially increasing the base area of the roof space. The extent of this movement is defined, in the innermost position of the base panels, by abutment of a stop member 58 with a recess 59 formed in plinth 15. The outermost position of the base panels is defined by abutment of a stop 58a on the base panel 47 with the frame member 11.

The outer face of each longitudinal wall element 48 is provided with a trim panel 60 which improves the overall appearance of the assembly and defines a channel 62 into which the corresponding longitudinal edge of the trim element 20 provided on roof panel structure 18 is received when the two base panel structures are retracted and the roof assembly is in the lowered position.

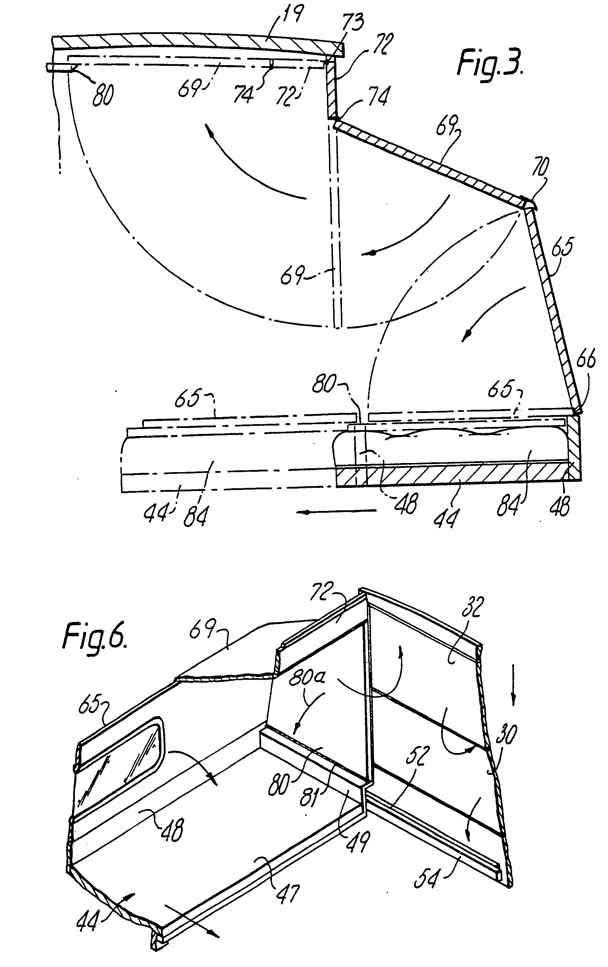

Each base panel 47 is provided with a rigid longitudinal wall panel 65 which, as shown in Figure 3, is connected to the longitudinal wall element 48 by means of a hinge 66. This longitudinal wall panel 65 forms the main side wall of the assembly and may be provided with a window 67 and/or a suitable ventilator. As shown in broken lines in Figure 3, in the collapsed position of the assembly, panel 65 folds downwardly into a horizontal position overlying its associated base panel 47, but once the roof structure has been raised, and the base panel structure 44, 45 moved into the outrigger position, this panel can be pushed upwardly into the position shown in unbroken lines in Figure 3. In this position, its upper longitudinal edge is engageable with a second longitudinal wall panel 69 which forms part of the roof panel structure 18. The panels 65, 69 are retained in the erected position by abutment of the lower panel 65 with the longitudinal lower edge of panel 69, and by a flange 70 which is provided on the outer face of the panel 69. This flange 70 also serves to weatherproof the joint between the wall panels 65 and 69.

Upper wall panel 69 is connected to the roof cap 19 via an intermediate panel 72 which in the erected position of the assembly extends vertically downwardly from the roof cap 19, and which is connected to this roof cap by a hinge 73. Panels 72 and 69 are connected by a hinge 74 which operates in the opposite direction to hinge 73. As will be seen from Figure 3, the intermediate wall panel 72 is designed to fold inwardly of the roof cap 19 so that it lies substantially parallel to the roof cap and immediately beneath it; in this position, panel 69 can be folded about its hinge 74 so that it too lies in a generally horizontal plane beneath the roof cap, where it is retained in position by clip 80. Intermediate panel 72 is provided in order to enable panel 69 to clear the downwardly depending trim element 20 (not shown in Figure 3) when the assembly is in the raised position.

The exposed ends of the roof assembly which are formed when the base panels are moved into position and the side walls are erected, are closed by end panels 80 which are connected to end wall members 49 of each base panel 44. The panels 80 are connected along hinge lines 81 and are foldable in a substantially vertical plane in the direction of arrow 80a in Figures 1 and 6, so that they overlie the base panels in a similar manner to longitudinal wall panels 65. The gap provided between the hinge line 81 and the base panel 47 is used to accommodate a mattress 84, as shown in Figure 3. The panels 80 are shown in the folded position in broken lines in Figure 3, and in the erect position are retained by catches 85 (Figure 2) provided on the inside face of upper wall panels 69. As will also be seen from Figure 3, in the collapsed position of the assembly side walls 65 overlie panels 80.

The edges of end panels 80 are weatherproofed by seals of flexible material, (not shown) and each end panel is provided with ventilating slots 86 to assist in ventilating the interior of the roof space.

The walls, roof and base panels of the assembly may be made of any suitable material such as wood, plastics or metal, or a combination; e.g. aluminium sheet cladding a wooden frame. They may be suitable heat insulated, e.g. by means of an interlayer of heat insulating material such as expanded polystyrene or glass fibre.

In order to enable the roof assembly to be moved into the raised position to allow erection of the outrigger walls, an assisting mechanism is provided, and this is shown in Figures 1, 5, 7 and 8. This assisting mechanism comprises, at each end of the roof assembly, a support arm 90 which is fixed to a connecting bar 91 journalled in support bearings 92, 93, 94 mounted on the fixed roof member, in this case the longitudinal frame member 11 as shown in Figure 2.

The two support bars 90a, 90b, are thereby pivotally mounted about a common axis to move simultaneously in parallel vertical planes disposed immediately adjacent the end walls of the roof assembly, as shown in Figure 5.

Each support arm 90 is provided with control means for controlling the pivotal movement of the arm, and in the embodiment illustrated, each control means comprises a gas strut 95 one end of which is pivotally mounted at 96 to the fixed roof member, and the other end of which is connected to the support arm 90 at pin 97. The gas strut 95 is pressurised to urge piston rod 95a out of cylinder 95b thereby urging the support arm 90 into the extended position shown in unbroken lines in Figure 7, but the strut can be compressed by movement of the support arm in an anticlockwise direction about its pivotal axis to move the arm and the strut into the retracted position shown in broken lines in Figure 7 when the roof assembly is in the lowered position.

The free end of the support arm 90 is curved to provide a suitable supporting surface 98 for a follower which is connected to the roof cap. In this case, the follower comprises a roller 99 which is journalled in a U-shaped support braket 100 secured to the underside of the roof cap 19, as shown in Figure 1. In the collapsed position of the roof assembly, this roller 99 is disposed at the beginning of the curved surface 98 formed on the support arm 90, as shown in broken lines in Figure 7. In this position, the gas strut is pressurised and is acting to urge the roof assembly into the elevated position.

When the catches holding the roof panel structure 18 in position are released, and the roof cap pushed upwardly, the gas strut 95 pivots arm 90 in an anticlockwise direction; the curved supporting surface 98 pushes roller 99, and hence roof assembly 18, upwardly, and this upward movement is continued as the bar moves through its arc of movement into the position shown in unbroken lines in Figure 7, where the gas strut is fully extended. The simultaneous operation of the support bars at the front and rear of the roof assembly ensure that the roof assembly is raised with the roof cap in a horizontal position at all times, thus stabilising the assembly and preventing twisting during the elevating operation. Furthermore, it will be seen from Figure 7 that the free ends of the U-shaped support bracket extend downwardly beyond the upper surface of the support arm 90, and this provides location in the horizontal plane for the roof assembly during lifting, thus preventing sideways movement of the assembly in bad weather conditions such as high winds, before the side walls can be erected to increase the rigidity of the assembly.

It will be appreciated that while the control mechanism for the roof is shown with a gas strut which operates to urge the assembly into the raised position, other assisting means such as a pair of hydraulic cylinders may also be used, and these may be pressurised to provide a power operated raising and lowering mechanism. Furthermore, while the raising and lowering mechanism described is illustrated in use with the rigid-walled roof of the invention, it can be utilised in any elevating roof assembly such as an assembly which is not provided with the outrigger base panels or an assembly in which the side walls are formed from flexible material.

If it is desired to locate the assistor mechanism within the roof opening, this can be achieved by designing the end walls to fold outwardly of the opening.

**Claims**

1. An elevating roof assembly for a vehicle comprising a fixed roof member (10) defining a generally rectangular opening; a roof panel (18) movable between a lowered position in which it overlies the opening, and an elevated position in which it is supported above the opening, support means (90, 95) adapted to support the roof panel in the elevated position; at least one base panel (44) movably mounted relative to said fixed roof member which base panel is movable from a stowed position to an extended position extending in a generally horizontal plane outwardly beyond one edge of said opening to form, when said roof assembly is erected, an extended base part of said assembly; and rigid, collapsible side wall means (65, 69) are adapted to extend in the elevated position of said roof panel between the corresponding edge of said roof panel and said base panel; characterised in that said support means comprises a support member (90) pivotally mounted on said fixed roof member for movement in a substantially vertical plane; control means (95) connected between the fixed roof member and the support member operable to control the pivotal movement of said support member; a supporting surface (98) on said support member; and follower means (99) connected to said roof panel operable to be supported on and to follow said support surface during raising and lowering of said assembly.

2. An elevating roof assembly as claimed in Claim 1, characterised in that the base panel (44) is slidably mounted with respect to the fixed roof member (10) and is slidable in a generally horizontal plane between said stowed position within said opening and said extended position and guide means (52, 54) are provided for guiding said sliding movement.

3. An elevating roof assembly as claimed in Claim 1 or Claim 2, characterised in that two said base panels (44, 45) are provided adapted to extend beyond opposite side edges of said opening thereby to form extended base parts of the assembly on two sides of said fixed roof member.

4. An elevating roof assembly as claimed in Claim 3, characterised in that both said base panels (44, 45) are slidably mounted relative to said fixed roof member and the width of said base panels is substantially one half that of the roof opening defined by said fixed roof members so that the two base panels can be disposed side-by-side within the opening in the stowed position.

5. An elevating roof assembly as claimed in any one of Claims 1 to 4, characterised in that said side wall means extend between the outermost edge of the respective base panel and the corresponding edge of the roof panel, and each comprise at least two rigid wall panels (65, 69), one of which (65) is connected to the base panel and the other of which (69) is connected to the roof panel, said wall panels being disposed one above the other when the assembly is in the elevated position.

6. An elevating roof assembly as claimed in Claim 5, characterised in that the lowermost of said wall panels (65) is hinged along its lower edge (66) to the outermost edge of the base panel, and in the stowed position of the base panel is folded along this hinge to overlie the base panel, and the uppermost wall panel (69) is hinged along its upper edge (74) to the roof panel (18) and can be folded inwardly thereof and stowed beneath the roof panel in the collapsed position of the assembly, said two panels forming the side wall means being interconnected along corresponding longitudinal edges to form a rigid structure in the elevated position of the assembly. ___

7. An elevating roof assembly as claimed in Claim 6, characterised in that said uppermost wall panel (69) is connected to a secondary wall panel (72) which secondary wall panel is connected by a hinge (73) to the roof panel (18) said side wall means thus being formed by three panels, two of which are connected to the roof panel and one of which is connected to the base panel.

8. An elevating roof assembly as claimed in any one of Claims 1 to 7, characterised in that rigid end panels (80) are hingedly connected to the respective base panel (44, 45) at each end to close each of the roof assembly bounded by a base panel when the roof is in the elevated position.

9. An elevating roof assembly as claimed in any one of Claims 1 to 8, characterised in that the end walls of the roof assembly which are not provided with extensible base panels are formed by rigid side wall members each comprising a pair of hinged wall panel (30, 32) which are adapted to fold inwardly of the roof opening in the collapsed position of the assembly.

10. An elevating roof assembly as claimed in any one of Claims 1 to 9 characterised in that the support member (90) is located immediately adjacent an end wall of the assembly for movement in a vertical plane parallel to the plane, when erected, of said end wall.

11. An elevating roof assembly as claimed in any one of Claims 1 to 10, characterised in that the support surface (98) on said support member (90) is curved in said vertical plane, and the support member comprises a support bar at least a free end of which is curved, said support surface being formed on the upper surface of said support bar.

12. An elevating roof assembly as claimed in any one of Claims 1 to 11, characterised in that said control means (95) for the support bar comprises a telescopic piston and cylinder assembly (95a, 95b) pivotally connected at one end (96) to the fixed roof member (10) and at the other end of the support bar (90).

13. An elevating roof assembly as claimed in any one of Claims 1 to 12, characterised in that said follower means comprises a roller (99) rotatably mounted in a support (100) connected to the roof panel.

14. An elevating roof assembly as claimed in any one of Claims 1 to 13, characterised in that said support means comprises a pair of said support members (90) provided at opposite ends of said roof assembly said support members being interconnected by a linkage (91) for simultaneous pivotal movement thereof.

**Patentansprüche**

1. Eine Hubdacheinheit für ein Fahrzeug, umfassend ein festes Dachelement (10), das eine im allgemeinen rechtwinklige Öffnung festlegt; eine Dachplatte (18), die zwischen einer abgesenkten Position, in der sie die Öffnung abdeckt, und einer angehobenen Position, in der sie oberhalb der Öffnung abgestützt wird, bewegbar ist; Stützvorrichtungen (90, 95), die so ausgeführt sind, daß sie die Dachplatte in der angehobenen Position abstützen; zumindest eine Bodenplatte (44), die im Verhältnis zum genannten festen Dachelement bewegbar montiert ist, wobei die Bodenplatte aus einer eingefahrenen Position in eine ausgefahrene Position bewegt werden kann, so daß sie in einer im allgemeinen horizontalen Ebene nach außen über eine Kante der genannten Öffnung verläuft, um so, wenn die genannte Dacheinheit angehoben ist, einen erweiterten Bodenabschnitt der gennannten Einheit zu bilden; sowie starre zusammenlegbare Seitenwandvorrichtungen (65, 69), die so ausgeführt sind, daß sie in der angehobenen Position der genannten Dachplatte zwischen der entsprechenden Kante der genannten Dachplatte und der genannten Bodenplatte verlaufen; dadurch gekennzeichnet, daß die genannte Stützvorrichtung ein am genannten festen Dachelement drehbar montiertes Stützelement (90) umfaßt, um eine Bewegung in einer im wesentlichen vertikalen Ebene durchführen zu können; eine verbindende Steuerungsvorrichtung (95) zwischen dem festen Dachelement und dem Stützelement, mit der die Drehbewegung des genannten Stützelements gesteuert werden kann; eine Stützfläche (98) am genannten Stützelement; sowie Nachlaufvorrichtungen (99) vorgesehen sind, die mit der genannten Dachplatte verbunden und so ausgeführt sind, daß sie von der genannten Stützfläche abgestützt werden und der genannten Stützfläche während des Anhebens und Absenkens der genannten Einheit folgen können.

2. Eine Hubdacheinheit gemäß Anspruch 1, dadurch gekennzeichnet, daß die Bodenplatte (44) im Verhältnis zum festen Dachelement (10) gleitend montiert und in einer im allgemeinen horizontalen Ebene zwischen der genannten eingefahrenen Position innerhalb der genannten Öffnung und der genannten ausgefahrenen Position gleitend bewegbar ist, und daß Führungsvorrichtungen (52, 54) vorgesehen sind, um die genannte gleitende Bewegung zu führen.

3. Eine Hubdacheinheit gemäß Anspruch 1 oder Anspruch 2, dadurch gekennzeichnet, daß die beiden genannten Bodenplatten (44, 45) so ausgeführt sind, daß sie sich über die gegenüberliegenden Seitenkanten der genannten Öffnung hinaus erstrecken, um so erweiterte Bodenabschnitte der Einheit auf zwei Seiten des genannten festen Dachelements zu bilden.

4. Eine Hubdacheinheit gemäß Anspruch 3, dadurch gekennzeichnet, daß die beiden genannten Bodenplatten (44, 45) im Verhältnis zum genannten festen Dachelement gleitend bewegbar sind und die Breite der genannten Bodenplatten im wesentlichen der Hälfte der von den genannten festen Dachelementen bestimmten Dachöffnung entspricht, so daß die beiden Bodenplatten in eingefahrener Position innerhalb der Öffnung Seite an Seite angeordnet werden können.

5. Eine Hubdacheinheit gemäß irgendeinem der Ansprüche 1 bis 4, dadurch gekennzeichnet, daß die genannten Seitenwandvorrichtungen zwischen der äußersten Kante der entsprechenden Bodenplatte und der entsprechenden Kante der Dachplatte verlaufen und jeweils zumindest zwei starre Wandplatten (65, 69) umfassen, von denen eine (65) mit der Bodenplatte und die andere (69) mit der Dachplatte verbunden ist, wobei die genannten Wandplatten übereinander angeordnet, sind, wenn sich die Einheit in der angehobenen Position befindet.

6. Eine Hubdacheinheit gemäß Anspruch 5, dadurch gekennzeichnet, daß die unterste der genannten Wandplatten (65) entlang ihrer unteren Kante (66) über eine Gelenkverbindung mit der äußersten Kante der Bodenplatte verbunden ist und in der eingefahrenen Position der Bodenplatte entlang dieser Gelenkverbindung so umgelegt werden kann, daß die Bodenplatte abgedeckt wird, und die oberste Wandplatte (69) entlang inhrer oberen Kante (74) über eine Gelenkverbindung mit der Dachplatte (18) verbunden ist und im Verhältnis zu dieser nach innen umgelegt und unterhalb der Dachplatte in der zusammengelegten Position der Einheit zusammengelegt werden, kann, wobei die genannten beiden Platten die Seitenwandvorrichtung bilden, die entlang entsprechender Längskanten miteinander verbunden sind, um so eine feste Konstruktion in der angehobenen Position der Einheit zu bilden.

7. Eine Hubdacheinheit gemäß Anspruch 6, dadurch gekennzeichnet, daß die genannte oberste Wandplatte (69) mit einer zweiten Wandplatte (72) verbunden ist, wobei die zweite Wandplatte über eine Gelenkverbindung (73) mit der Dachplatte (18) verbunden ist und somit die genannten Seitenwandvorrichtungen aus drei Platten gebildet werden, von denen zwei mit der Dachplatte und eine mit der Bodenplatte verbunden ist.

8. Eine Hubdacheinheit gemäß irgendeinem der Ansprüche 1 bis 7, dadurch gekennzeichnet, daß starre Endplatten (80) über eine Gelenkverbindung mit der entsprechenden Bodenplatte (44, 45) an jedem Ende verbunden sind, um die von einer Bodenplatte abgegrenzte Dacheinheit an jedem Ende zu verschließen, wenn sich das Dach in der angehobenen Position befindet.

9. Eine Hubdacheinheit gemäß irgendeinem der Ansprüche 1 bis 8, dadurch gekennzeichnet, daß die Endwände des Dacheinheit, die nicht mit ausfahrbaren Bodenplatten ausgestattet sind, von starren Seitenwandelementen gebildet werden, wobei jedes dieser Elemente ein Paar mit Gelenkverbindung ausgestatteter Wandtafeln (30, 32) umfaßt, die so ausgeführt sind, daß sie sich im Verhältnis zur Dachöffnung in der zusammengelegten Position der Einheit nach innen zusammenlegen lassen.

10. Eine Hubdacheinheit gemäß irgendeinem der Ansprüche 1 bis 9, dadurch gekennzeichnet, daß das Stützelement (90) in unmittelbarer Nähe einer Endwand der Einheit angeordnet ist, um so die genannte Endwand in einer vertikalen Ebene parallel zur Ebene in der angehobenen Position bewegen zu können.

11. Eine Hubdacheinheit gemäß irgendeinem der Ansprüche 1 bis 10, dadurch gekennzeichnet, daß die Stützfläche (98) an genannten Stützelement (90) in der genannten vertikalen Ebene gekrümmt ist und das Stützelement einen Stützstab umfaßt, dessen zumindest freies Ende gekrümmt ist, wobei die genannte Stützfläche an der oberen Fläche des genannten Stützstabs ausgebildet ist.

12. Eine Hubdacheinheit gemäß irgendeinem der Ansprüche 1 bis 11, dadurch gekennzeichnet, daß die genannte Steuerungsvorrichtung (95) für den Stützstab eine teleskopartige Kolben- und Zylindereinheit (95a, 95b) umfaßt, die an einem Ende (96) drehbar mit dem festen Dachelement (10) und am anderen Ende mit dem Stützstab (90) verbunden ist.

13. Eine Hubdacheinheit gemäß irgendeinem der Ansprüche 1 bis 12, dadurch gekennzeichnet, daß die genannte Nachlaufvorrichtung eine Rolle (99) umfaßt, die drehbar in einer mit der Dachplatte verbundenen Stütze (100) montiert ist.

14. Eine Hubdacheinheit gemäß irgendeinem der Ansprüche 1 bis 13, dadurch gekennzeichnet, daß die genannte Stützvorrichtung ein Paar der genannten Stützelemente (90) umfaßt, die an gegenüberliegenden Enden der genannten Dacheinheit vorgesehen sind, wobei die genannten Stützelemente über eine Verbindung (91) miteinander verbunden sind, damit sich diese gleichzeitig drehend bewegen können.

## Revendications

1. Ensemble de toit à surélever pour un véhicule, comprenant un élément de toit fixe (10) présentant une ouverture généralement rectangulaire; un panneau de toit (18) mobile entre une position abaissée dans laquelle il est logé dans l'ouverture et une position relevée dans laquelle il est supportée au-dessus de l'ouverture des moyens de support (90, 95) destinés à supporter le panneau de toit dans sa position relevée; au moins un panneau de base (44) mobile par rapport audit élément de toit fixe, panneau de base qui est mobile d'une position rabattue à une position déployée s'étendant dans un plan généralement horizontal vers l'extérieur au-delà d'un bord de ladite ouverture pour former, lorsque ledit ensemble de toit est déployé, une pièce de base prolongée dudit ensemble, et des moyens de paroi latérale (65, 69) rigides, repliables, sont agencés pour s'étendre, dans la position relevée dudit panneau de toit, entre le bord correspondant dudit panneau de toit et dudit panneau de base; caractérisé en ce que lesdits moyens de support comprennent un organe de support (90) monté sur ledit élément de toit fixe et pivotant dans un plan substantiellement vertical; des moyens de commande (95) attachés entre l'élément de toit fixe et l'organe de support manoeuvrables pour commander le mouvement de pivotement dudit organe de support; une surface d'appui (98) sur ledit organe de support; et des moyens de poursuite (99) attachés audit panneau de toit manoeuvrables pour être supportés sur et pout suivre ladite surface d'appui pendant la montée et le descente dudit ensemble.

2. Ensemble de toit à surélever suivant la revendication 1, caractérisé en ce que le panneau de base (44) peut glisser par rapport à l'élément de toit fixe (10) et peut glisser dans un plan généralement horizontal entre ladite position rabattue à l'intérieur de ladite ouverture et ladite position déployée, et en ce qu'il est prévu des moyens de guidage (52, 54) pour guider ledit mouvement de glissement.

3. Ensemble de toit à surélever suivant la revendication 1 ou 2, caractérisé en ce qu'il est prévu deux desdits panneaux de base (44, 45) agencés pour s'étendre au-delà des bords latéraux opposés de ladite ouverture pour former ainsi des pièces de base prolongées de l'ensemble sur les deux côtés dudit élément de toit fixe.

4. Ensemble de toit à surélever suivant la revendication 3, caractérisé en ce que lesdits deux panneaux de base (44, 45) peuvent glisser par rapport audit élément de toit fixe et en ce que la largeur desdits panneaux de base est substantiellement égalé à la moitié de celle de l'ouverture du toit définie par lesdits éléments de toit fixés, de sorte que les deux panneaux de base peuvent être disposés côte à côte dans l'ouverture dans leur position rabattue.

5. Ensemble de toit à surélever suivant l'une ou l'autre des revendications 1 à 4, caractérisé en ce que lesdits moyens de paroi latérale s'étendent entre le bord le plus extérieur du panneau de base respectif et le bord correspondant du panneau de toit, et en ce que chacun d'eau comprend au moins deux panneaux de paroi (65, 69) rigides, dont l'un (65) est attaché au panneau de base et dont l'autre (69) est attaché au panneau de toit, lesdits panneaux de paroi étant disposés l'un au-dessus de l'autre lorsque l'ensemble se trouve en position relevée.

6. Ensemble de toit à surélever suivant la revendication 5, caractérisé en ce que le plus bas desdits panneaux de paroi (65) est suspendu le long de son bord inférieur (66) au bord le plus extérieur du panneau de base et, en position rabattue du panneau de base, il est replié le long de cette articulation pour reposer sur le panneau de base, et en ce que le panneau de paroi le plus élevé (69) est suspendu le long de son bord supérieur (74) au panneau de toit (18) et peut être replié vers l'intérieur de celui-ci et rangé sous le panneau de toit dans la position repliée de l'ensemble, lesdits deux panneaux formant les moyens de paroi latérale étant assemblés le long de bords longitudinaux correspondants pour former une structure rigide dans la position relevée de l'ensemble.

7. Ensemble de toit à surélever suivant la revendication 6, caractérisé en ce que ledit panneau de paroi plus élevé (69) est attaché à un panneau de paroi secondaire (72), panneau de paroi secondaire qui est attaché par une articulation (73) au panneau de toit (18), lesdits moyens de paroi latérale étant donc formés de trois panneaux, dont deux sont attachés au panneau de toit et dont un est attaché au panneau de base.

8. Ensemble de toit à surélever suivant l'une ou l'autre des revendications 1 à 7, caractérisé en ce que les panneaux d'extrémité rigides (80) sont assemblés par articulation au panneau de base respectif (44, 45), à chaque extrémité, pour fermer chaque ensemble de toit limité par un panneau de base lorsque le toit est en position relevée.

9. Ensemble de toit à surélever suivant l'une ou l'autre des revendications 1 à 8, caractérisé en ce que les parois d'extrémité de l'ensemble de toit qui ne sont pas pourvues de panneaux de base extensibles sont formées par des éléments de paroi latérale rigides dont chacun comprend une paire de panneaux de paroi (30, 32) articulés qui sont agencés de façon à se replier vers l'intérieur de l'ouverture du toit dans la position repliée de l'ensemble.

10. Ensemble de toit à surélever suivant l'une ou l'autre des revendications 1 à 9, caractérisé en ce que l'organe de support (90) est situé au voisinage immédiat d'une paroi d'extrémité de l'ensemble pour se mouvoir dans un plan vertical parallèle au plan de ladite paroi d'extrémité lorsqu'il est déployé.

11. Ensemble de toit à surélever suivant l'une ou l'autre des revendications 1 à 10, caractérisé en ce que la surface d'appui (98) sur ledit organe de support (90) est incurvée dans ledit plan vertical, et en ce que l'organe de support comprend une barre d'appui dont au moins une extrémité libre est incurvée, ladite surface d'appui étant formée sur la surface supérieure de ladite barre d'appui.

12. Ensemble de toit à surélever suivant l'une ou l'autre des revendications 1 à 11, caractérisé en ce que lesdits moyens de commande (95) pour la barre d'appui comprennent un ensemble télescopique à piston et cylindre (95a, 95b) articulé à une extrémité (96) à l'élément de toit fixe (10) et à l'autre extrémité à la barre d'appui (90).

13. Ensemble de toit à surélever suivant l'une ou l'autre des revendications 1 à 12, caractérisé en ce que lesdits moyens de poursuite comprennent un galet (99) tournant dans une support (100) attaché au panneau de toit.

14. Ensemble de toit à surélever suivant l'une ou l'autre des revendications 1 à 13, caractérisé en ce que lesdits moyens de support comprennent une paire desdits organes de support (90) prévus aux extrémités opposées dudit ensemble de toit, lesdits organes de support étant reliés par un organe de liaison (91) pour assurer leur mouvement de pivotement simultané.

*Fig.1.*

0 079 250

Fig.2.

0 079 250

Fig.3.

Fig.6.

0 079 250

Fig 4

Fig.7.

4

Fig.5.

Fig.8.